# EUROPEAN PATENT SPECIFICATION

(11) **EP 2 977 176 B1**
(45) Date of publication and mention of the grant of the patent: **25.07.2018**
(21) Application number: 13878760.1
(22) Date of filing: 27.04.2013
(51) Int. Cl.: B29C 45/64, B29C 49/56, B29C 49/36, B29L 22/00

(54) **SYSTEM WITH LINKAGE MECHANISM BETWEEN UNIAXIAL DIE OPENING AND CLOSING AND BOTTOM DIE POSITIONING**
SYSTEM MIT GESTÄNGEMECHANISMUS ZWISCHEN EINACHSIGER STEMPELÖFFNUNG UND -SCHLIESSUNG UND UNTERSTEMPELPOSITIONIERUNG
SYSTÈME AVEC MÉCANISME DE LIAISON ENTRE L'OUVERTURE ET LA FERMETURE D'UNE MATRICE UNIAXIALE ET LE POSITIONNEMENT D'UNE MATRICE INFÉRIEURE

(30) Priority: 19.03.2013 CN 201310088430
(43) Date of publication of application: 27.01.2016
(60) Divisional application: 17170399.4
(73) Proprietor: Jiangsu Newamstar Packaging Machinery Co., Ltd, Zhangjiagang, Jiangsu 215624 (CN)
(72) Inventor: DONG, Hailong, Zhangjiagang Jiangsu 215624 (CN); CHU, Xingan, Zhangjiagang Jiangsu 215624 (CN); YANG, Xinliang, Zhangjiagang Jiangsu 215624 (CN); HE, Deping, Zhangjiagang Jiangsu 215624 (CN)
(74) Representative: De Vries & Metman
(86) International application number: PCT/CN2013/074917
(87) International publication number: WO 2014/146324

(56) References cited:
- WO-A1-2006/029585
- WO-A1-2007/025912
- CN-A- 102 133 797
- CN-A- 102 962 989
- CN-U- 203 157 125
- CN-Y- 201 325 179
- DE-A1-102007 008 023
- US-A- 5 346 386
- US-A1- 2006 093 699
- US-A1- 2006 093 699
- US-A1- 2010 203 185
- US-A1- 2011 280 984
- US-A1- 2012 177 771
- US-A1- 2012 306 127

## Description

### Field of the Invention

The present invention relates to the field of processing equipment of a beverage bottle, and more particularly to a bottle blowing machine.

### Description of the Related Art

Generally a bottle blowing machine comprises a mould opening and closing mechanism and a bottom mould positioning mechanism. A conventional mould opening and closing mechanism comprises a machine frame, a fixed mould plate and a moving mould plate which are mounted on the machine frame. A mould locking mechanism is provided at the joint of the fixed mould plate and the moving mould plate. The moving mould plate is L-shaped and driven by a mould opening and closing air cylinder. The mould opening and closing air cylinder drives a spline, and the spline drives a moving mould plate gear mounted on a gear shaft, and the gear shaft is connected with the moving mould plate and mounted on a support frame.

A conventional bottom mould positioning mechanism, for example, a bottom mould locking mechanism of a linear bottle blowing machine as disclosed in patent publication No. CN201755911U, comprises a mould mounting plate, a bottle mould, a bottom mould, an actuating mechansim, a positioning mechanism and a supporting seat. The end of the cavity of the bottle mould is sleeved with the bottom mould which is connected with the actuating mechanism. The positioning mechanism is horizontally disposed on the support seat and comprises a positioning block air cylinder and a positioning block connected with each other. The actuating mechanism comprises a bottom mould mounting plate and a bottom mould elevating air cylinder. An upper surface of the bottom mould mounting plate is connected with the bottom mould, and a lower surface of the bottom mould mounting plate is connected with the bottom mould elevating air cylinder which is mounted on a support frame.

Thus, in the prior art, the mould opening and closing mechanism and the bottom mould positioning mechanism are complicated in configuration and bulky, and each mechanism is self-driven, thereby leading to the inconvenience of operation and high cost.

Further devices are known from US 2010/203185 A1 and US 2012/177771 A1. US 2010/203185 A1 relates to a device for blow molding containers. The blow mold which is composed of at least two blow mold segments is held in place by mold supports of a blow molding station that is arranged on a supporting structure. A bottom part is used in addition to the blow mold segments. Both the mold supports and the bottom part are arranged in such a way that they can be mechanically positioned. The mold supports and the bottom part are arranged in such a way that they can be mechanically coupled to each other. One of the mold supports is immobile and the other mold support is swiveled to the supporting structure. US 2012/177771 A1 relates to a device for blow-molding containers, the device comprising a structure and a platform mounted to rotate on the structure about an axis of rotation, the platform being provided with blower members and with molds that are mounted under the blower members, each of which comprises a stationary mold portion and a movable mold portion that is movable by control means between an open position and a closed position for the mold, wherein the device includes blocking members for blocking the molds in the closed state, each blocking member comprising a strut mounted on the platform to move between a retracted position and a blocking position.

US 2012/306127 relates to an apparatus for the stretch blow molding of plastics material pre-forms to form plastics material containers. US 2006/093699 relates to a device for blow-molding or stretch blow-molding of themoplastic material. CN 201 325 179 relates to a die opening and locking mechanism of a bottle blowing machine. US 2011/280984 relates to a device for transforming plastics preforms into containers with at least one blow mould for receiving the plastics preforms. WO 2007/025912 relates to a mold-carrier unit for a thermoplastic container blowing machine. US 5 346 386 relates to a device which is used for the blow moulding of thermoplastic synthetic material.

### Summary of the Invention

An object of the invention is to provide an improved linkage of mould opening and closing and bottom mould positioning.

In order to solve the above technical problem, the following technical solution is utilized in the invention.

A system according to an aspect of the invention comprises a bottle blow moulding machine having a machine frame, and a linkage of mould opening and closing and bottom mould positioning, mounted on the bottle blowing machine, the linkage comprising
a mould opening and closing assembly having a mould opening state and a mould closing state, which comprises a bottom mould movable relative to a machine frame of the bottle blowing machine in up-down direction, a fixed mould plate fixedly disposed on the machine frame, and a moving mould plate rotatable relative to the machine frame; and
a bottom mould positioning assembly for fixing the bottom mould with the machine frame of the bottle blowing machine;
wherein when the mould opening and closing assembly is in the mould closing state, the moving mould plate is engaged with the fixed mould plate, and the moving mould plate, the fixed mould plate and the bottom mould together enclose to provide a cavity;
wherein the bottom mould positioning assembly comprises:
a plurality of sliding blocks slidably disposed on the machine frame;
multiple swing members swingably disposed on the machine frame for driving the sliding of the plurality of sliding blocks; and
a rotation member rotatable relative to the machine frame for driving the swinging of the swing members relative to the machine frame during its' rotation, the moving mould plate and the rotation member respectively are fixedly connected on a rotation shaft which is driven by a power source to rotate around an axis of rotation;
when the mould opening and closing assembly is in the mould closing state, the plurality of sliding blocks are inserted between the bottom mould and the machine frame and contact against the bottom mould, when the mould opening and closing assembly is in the mould opening state, the plurality of sliding blocks are detached from the bottom mould. The rotation shaft drives the moving mould plate and the rotation member to rotate, and the rotation of the rotation member is converted into the sliding of the sliding blocks by means of the swing members, and thus the mould closing and the positioning of the bottom mould in the mould closing state are synchronously achieved, vice versa, the mould opening and the releasing of the bottom mould in mould opening state also can be synchronously achieved.

Preferably, a through-hole is opened on each of the rotation member and the moving mould plate for the rotation shaft extending through the rotation member and the moving mould plate from bottom to top.

More preferably, a swing arm is connected on a lower end of the rotation shaft, and a power source drives the rotation of the rotation shaft by the swing arm.

Preferably, the plurality of sliding blocks comprises a first sliding block and a second sliding block located at two opposite sides of the bottom mould. The bottom mould positioning assembly also comprises a first guide rail and a second guide rail fixedly disposed on the machine frame, the first sliding block is slidably disposed on the first guide rail, and the second sliding block is slidably disposed on the second guide rail. Thus, the bilateral positioning of the bottom mould is achieved by means of the two sliding blocks.

Still more preferably, the multiple swing members comprise a first swing member and a second swing member which respectively are rotatably connected with the machine frame. The first swing member and the second swing member respectively and correspondingly drive the sliding of the first sliding block and the second sliding block. Thus, the sliding of the two sliding blocks are controlled separately by the swinging of the two swing members, this will simplify controlling means.

Preferably, a first sliding groove is opened on the first swing member at a distance from the connecting position of the first swing member with the machine frame, and a second sliding groove is opened on the second swing member at a distance from the connecting position of the second swing member with the machine frame, a first projection and a second projection respectively are formed on an upper surface of the first sliding block and the second sliding block, the first projection is slidably inserted into the first sliding groove, and the second projection is slidably inserted into the second sliding groove. The portions of the two swing members where the sliding grooves are opened respectively form a transmission fork configuration, and the swing members control the sliding of the sliding blocks by means of the transmission fork configurations.

More preferably, the rotation member has a first guiding surface and a second guiding surface on its' side surface, a first protrusion protruding towards the rotation member is formed on the first swing member, a second protrusion protruding towards the rotation member is formed on the second swing member. When the rotation member rotates relative to the machine frame, the first guiding surface slidably contacts with the first protrusion, the second guiding surface slidably contacts with the second protrusion, and the distance between the contact position of the first guiding surface with the first protrusion and the axis of rotation of the rotation member and the distance between the contact position of the second guiding surface with the second protrusion and the axis of rotation of the rotation member respectively change with the rotation of the rotation member. This change in distance will produce a guiding effect such that the protrusions will move and the two swing members swing correspondingly.

More preferably, an elastic member is arranged between each of the swing members and the machine frame for providing a restoring force for the swing members. For example, in the course of rotation of the rotating member, when the contact positions of the protrusions with the guiding surfaces get farther and farther away from the second axis, the swing members are pushed by the rotating member to swing. Otherwise, in the course of rotation of the rotating member, when the contact positions of the protrusion and the guiding surfaces get nearer and nearer to the second axis, an external force is required to drive the swing members to swing, and the elastic member hereby is used for providing such an external force. Certainly, the external force can be provided in other ways, for example, the swing members are driven by the rotating member.

In a preferable embodiment, the mould opening and closing assembly also comprises a locking mechanism for locking the fixed mould plate with the moving mould plate in the mould closing state. The locking mechanism comprises: at least one first connecting convex platform formed on the moving mould plate, a pin hole being opened on the first connecting convex platform; a second connecting convex platform formed on the fixed mould plate for cooperating with the first connecting convex platform, a mounting hole being opened on the second connecting convex platform, and a locking pin movably or extendably inserted into the mounting hole of the second connecting convex platform. A connecting shaft extends through the fixed mould plate, and the connecting shaft is connected with the locking pin in a transmission way. When the mould opening and closing assembly is in the mould closing state, the locking pin extends through the second connecting convex platform and into the pin hole to lock the moving mould plate with the fixed mould plate, in such a way that the locking pin is allowed to be detached from the pin hole and enter into mounting hole of the second connecting convex platform when the moving mould plate is needed to be opened relative to the fixed mould plate.

In a particular embodiment, the machine frame comprises a support frame, an upper frame located above the support frame and an upright frame fixedly connected between the support frame and the upper frame, both the mould opening and closing assembly and bottom mould positioning assembly are located above the support frame, a through-hole is opened on the support frame, the rotation shaft rotatably extends through the through-hole such that a lower portion of the rotation shaft extends below the support frame. One end of the first swing member and one end of the second swing member respectively are rotatably connected with the support frame, and the guide rails as described before respectively are fixedly provided on the support frame. Based on such a design, the power source, the actuating mechanisms located between the power source and the rotation shaft and the like, can be arranged below the support frame, such that the space below the support frame can be reasonably utilized, and the configuration of the whole bottle blowing machine is more compact.

More preferably, an upper end of the rotation shaft is rotatably connected with the upper frame.

Due to the above technical solution, the present invention has the following advantages as compared with the prior art: the linkage of the mould opening and closing assembly and the bottom mould positioning assembly are driven by one rotation shaft. Thus, the driving is achieved by a simple configuration, and the whole device of the invention has simple structure and convenient operation and small volume.

### Brief Description of the Drawings

Fig.1 is a assembly drawing of a mould opening and closing assembly and a bottom mould assembly and other parts according to the invention, wherein the mould opening and closing is in the mould closing state;
Fig.2 is a assembly drawing of a mould opening and closing assembly and a bottom mould assembly and other parts according to the invention, wherein the mould opening and closing assembly is in the mould opening state;

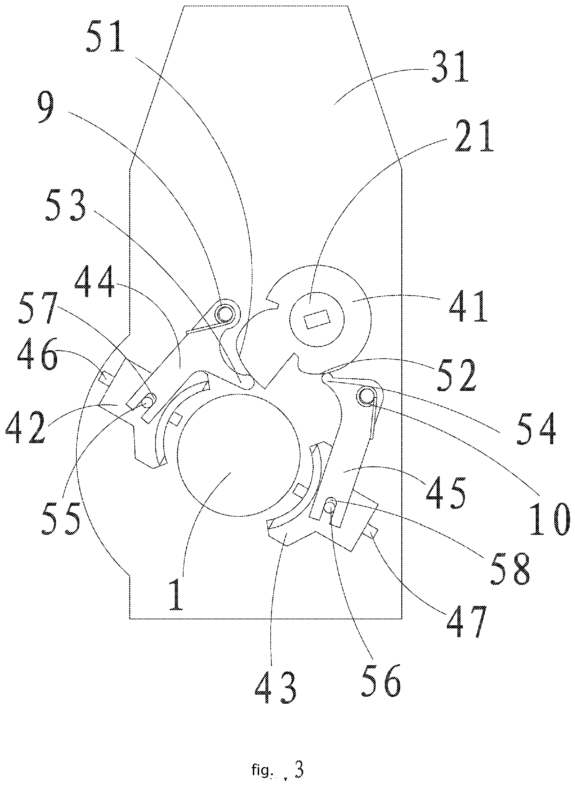

Fig.3 is a top view of the bottom mould positioning mechanism in mould opening state according to one embodiment of the invention, ;

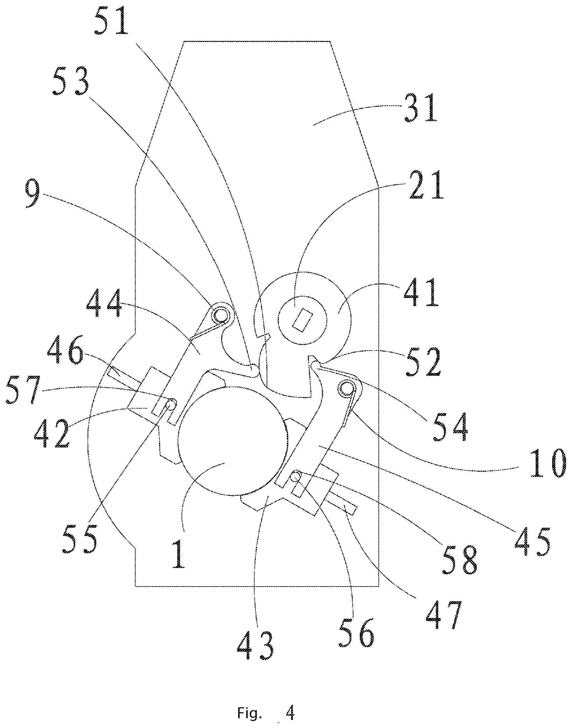

Fig.4 is a top view of the bottom mould positioning mechanism of fig.3 in the mould closing state.
   wherein: 1. a bottom mould; 2. a fixed mould plate; 3. a moving mould plate; 4. a first connecting convex platform; 5. a pin hole; 6. a second connecting convex platform; 7. a connecting shaft; 8. a locking pin; 9. a first torsional spring; 10. a second torsional spring; 21. a rotation shaft; 22. a swing arm; 31. a support frame; 32. an upper frame; 33. an upright frame; 41. a rotation member; 42. a first sliding block; 43. a second sliding block; 44. a first swing member; 45. a second swing member; 46. a first guide rail; 47. a second guide rail; 51. a first guiding surface; 52. a second guiding surface; 53. a first protrusion; 54. a second protrusion; 55. a first projection; 56. a second projection; 57. a first sliding groove; 58. a second sliding groove.

### Description of the Preferred Embodiments

The present invention will be described hereinafter with reference to the accompanying drawings. It is to be noted, however, that the drawings are given only for illustrative purpose and therefore not to be considered as limiting of its scope, for the invention may admit to other equally effective embodiments.

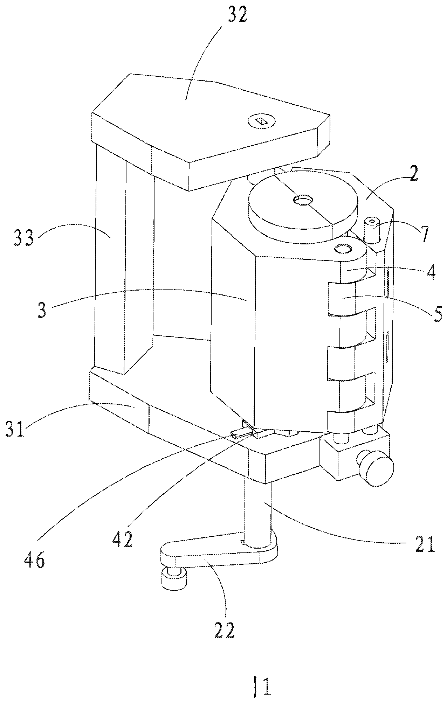

Fig.1-2 show a mould opening and closing assembly, a bottom mould positioning assembly and a linkage for them, all of which are mounted on a bottle blowing machine for use. The structure of the bottle blowing machine is well known in the art, and the other parts of the bottle blowing machine are not involved in the invention, thus, the bottle blowing machine is partially shown in the invention, instead of the whole structure.

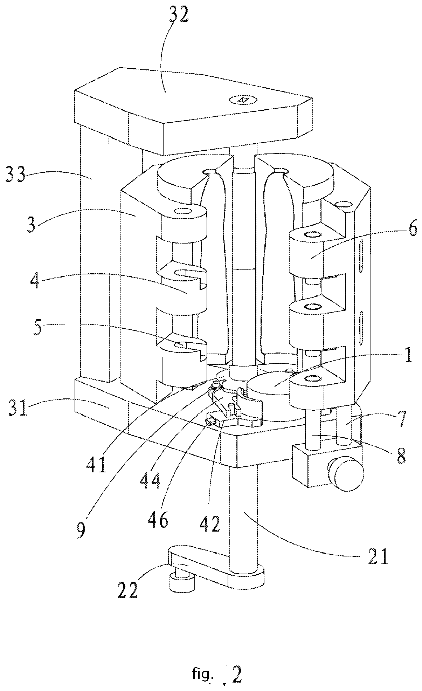

The mould opening and closing assembly comprises a bottom mould 1 movable relative to a machine frame in up-down direction, a fixed mould plate 2 disposed on the machine frame of the bottle blowing machine, and a moving mould plate 3 cooperating with the fixed mould plate 2. The mould opening and closing assembly has a mould opening state and a mould closing state, when in the mould closing state, the bottom mould 1, the fixed mould plate 2 and the moving mould plate 3 together enclose to provide a cavity, and the moving mould plate 3 is engaged with the fixed mould plate 2, as shown in fig.1. It can be seen from the fig.2 that, the fixed mould plate 2 and the moving mould plate 3 respectively are provided with a mould (not indicated by a reference number), and the moulds on the fixed mould plate 2 and the moving mould plate 3 cooperate with each other to shape up a bottle.

The mould opening and closing assembly also comprises a locking mechanism for locking the fixed mould plate 2 with the moving mould plate 3 in the mould closing state. At least one first connecting convex platform 4 is provided on the moving mould plate 3, a second connecting convex platform 6 is disposed on the fixed mould plate 2, in the embodiment shown in fig.2, there are three first connecting convex platforms 4, a notch is formed between adjacent two first connecting convex platforms 4. There are three second connecting convex platforms 6, a notch also is formed between adjacent two first connecting convex platforms 4. The first connecting convex platforms 4 and the second connecting convex platforms 6 are staggered with each other, such that a connecting convex platform of them corresponds to a notch of the other one, and the moving mould plate 3 and the fixed mould plate 2 are cooperated and connected with each other in closing state by means of the connecting convex platforms. A pin hole 5 is opened on each first connecting convex platform 4, and preferably the pin hole 5 extends through the first connecting convex platform 4 in up-down direction. A mounting hole (not shown by a reference number) is opened on each second connecting convex platform 6, and a locking pin 8 is movably or extendably provided in the mounting hole, and the quantity of the locking pins 8 is the same as that of the second connecting convex platforms 6. A connecting shaft 7 extends through the fixed mould plate 2, and the connecting shaft 7 is connected with the locking pin 8 in a transmission way. The connecting shaft 7 and locking pin 8 shown in fig.2 are parallel to each other, and the connecting shaft 7 is connected with the locking pin 8 by a connecting rod in a transmission way, and one lowest locking pin 8 is directly connected with a driving block. When in the mould closing, the first connecting convex platforms 4 of the moving mould plate 3 are inserted into the notches of the second connecting convex platforms 6 of the fixed mould plate 2, the driving block is pulled upwards, such that the connecting shaft 7 is driven by the driving block, and the connecting shaft 7 drives the locking pins 8 to extend through the second connecting convex platforms 6 and into the pin holes 5, and thus the moving mould plate 3 and the fixed mould plate 2 are locked with each other. When the mould opening is desired, the locking pins 8 are driven by the connecting shaft 7 to leave the pin holes 5 and enter into the mounting holes of the second connecting convex platforms 6, such that the moving mould plate 3 can be separated from the fixed mould plate 2.

Fig.s 3-4 more clearly illustrates the structure of a bottom mould positioning assembly.

Referring to fig.s 2 and 3-4, the bottom mould positioning assembly comprises a rotation member 41, multiple swing members cooperating with the rotation member 41 and a plurality of sliding blocks slidable in horizontal direction. One end of each of the multiple swing members is rotatably connected with the machine frame, and the other end is connected with one of the plurality of sliding blocks. Specifically, the sliding blocks comprises a first sliding block 42 and a second sliding block 43 located at two opposite sides of the bottom mould 1, the multiple swing members comprise a first swing member 44 and a second swing member 45 rotatably connected with the machine frame.

The bottom mould positioning assembly also comprises a first guide rail 46 and a second guide rail 47 fixedly disposed on the machine frame, and the first sliding block 42 and the second sliding block 43 respectively slide along the first guide rail 46 and the second guide rail 47.

A first projection 55 and a second projection 56 respectively are formed on an upper surface of the first sliding block 42 and the second sliding block 43, a first sliding groove 57 and a second sliding groove 58 respectively are formed on other end of the first swing member 44 and the second swing member 45, the first projection 55 is slidably inserted into the first sliding groove 57, and the second projection 56 is slidably inserted into the second sliding groove 58.
a first guiding surface 51 and a second guiding surface 52 are provided on the rotation member 41, a first protrusion 53 and a second protrusion 54 respectively are provided on the first swing member 44 and the second swing member 45. When the rotation member 41 rotates, the first protrusion 53 slides along the first guiding surface 51, and the second protrusion 54 slides along the second guiding surface 52, as shown in fig.s 3-4.

Preferably, a first torsional spring 9 is arranged between the first swing member 44 and the machine frame, a second torsional spring 10 is arranged between the second swing member 45 and the machine frame, the two torsional springs respectively provide a restoring force for the two swing members.

When the first protrusion 53 moves away from the axis of rotation of the rotation shaft 21 under the guiding of the first guiding surface 51, the first swing member 44 is pushed by the rotation member 41 to rotate. When the contact position of the first guiding surface 51 with the first protrusion 53 becomes nearer and nearer to the axis of rotation of the rotation shaft 21, the first torsional spring 9 provides an applied force for the first swing member 44 such that the first swing member 44 swings. The swinging principle of the second swing member 45 is the same as that of the first swing member 44.

The rotation member 41 and the moving mould plate 3 are fixedly connected with the rotation shaft 21 which is driven by a power source to rotate around an axis of rotation. In the embodiment shown in fig.s 1-4, the rotation shaft 21 is configured as a cylinder, and its' shaft axis is the axis of rotation thereof. The rotation shaft 21 extends through the rotation member 41 and the moving mould plate 3 from down to up and drives them to rotate. It is required that the rotation shaft 21 drives the moving mould 3 to move towards or leave the fixed mould plate 2, thus, the rotation shaft 21 alternatively rotates between the positive direction and negative direction.

In the embodiment shown in fig.s 1-2, a swing arm 22 is connected on the lower end of the rotation shaft 21, and a power source drives the rotation of the rotation shaft 21 by means of the swing arm 22.
when the mould closing is desired, the power source drives the swing arm 22 to drive the rotation of the rotation shaft 21 in positive direction, such that the moving mould plate 3 rotates with the rotation of the rotation shaft 21 and draws close to the fixed mould plate 2, meanwhile, the rotation member 41 also rotates with the rotation shaft 21, the first protrusion 53 slide along the first guiding surface 51, the second protrusion 54 slide along the second guiding surface 52. The first swing member 44 swings under the pushing of the rotation member 41 or under the applied force of the first torsional spring 9, and the second swing member 45 swings under the pushing of the rotation member 41 or under the applied force of the second torsional spring 10, such that the first sliding block 42 and the second sliding block 43 respectively slide along the first guide rail 46 and the second guide rail 47, until the two sliding blocks are inserted between the bottom mould 1 and the machine frame and contact against the bottom mould 1 below the bottom mould 1, so that the bottom mould 1 is positioned.

When the mould opening is desired, the rotation shaft 21 reversely rotates relative to the opposite direction, the moving mould plate 3 is opened relative to the fixed mould plate 2, and the rotation member 41 also inversely and synchronously rotates, the two sliding blocks respectively are driven by the first swing member 44 and the second swing member 45 to move away from the bottom mould 1. The term "positive direction" and "negative direction" mentioned herein and throughout the invention are described only for illustrating two kinds of movement in opposite directions, and not strictly corresponding to the clockwise or anti-clockwise direction. In the embodiment shown in fig.s 1-4, the "positive direction" corresponds to the anti-clockwise direction, and the "negative direction" corresponds to the clockwise direction.

It can be seen from the above description that, the linkage of the mould opening and closing and bottom mould positioning is achieved by means of the above structure.

When in the mould closing state, a gap is formed between the bottom mould 1 and the machine frame, the first sliding block 42 and the second sliding block 43 respectively slide along the first guide rail 46 and the second guide rail 47 towards the gap and insert into the gap, and contact against with the bottom mould 1 and machine frame.

The machine frame comprises a support frame 31, an upper frame 32 located above the support frame 31 and an upright frame 33 fixedly connected between the support frame 31 and the upper frame 32. Both the mould opening and closing assembly and bottom mould positioning assembly are located above the support frame 31. A cam 11 is located below the support frame 31, one end of each of the first swing member and the second swing member is rotatably connected with the support frame 31, and the first guide rail 46 and the second guide rail 47 respectively are fixedly disposed on the support frame 31. A through-hole is opened on the support frame 31 for the rotation shaft 21 rotating therein, and the rotation shaft 21 is rotatable within the through-hole. The upper end of the rotation shaft 21 is rotatably connected with the upper frame 32.

## Claims

1. A system comprising:
a bottle blow moulding machine having a machine frame (31, 32, 33),
a linkage for mould opening and closing and bottom mould (1) positioning, mounted on the bottle blowing machine, the linkage comprising:
a mould opening and closing assembly having a mould opening state and a mould closing state, which comprises a bottom mould (1) movable relative to a machine frame of the bottle blowing machine in up-down direction, a fixed mould plate (2) fixedly disposed on the machine frame, and a moving mould plate (3) rotatable relative to the machine frame,
wherein the moving mould plate (3) is fixedly connected on a rotation shaft (21) which is driven by a power source to rotate around an axis of rotation; and
a bottom mould positioning assembly for fixing the bottom mould (1) with the machine frame of the bottle blowing machine;
wherein when the mould opening and closing assembly is in the mould closing state, the moving mould plate (3) is engaged with the fixed mould plate (2), and the moving mould plate (3), the fixed mould plate (2) and the bottom mould (1) together enclose to provide a cavity;
**characterized in that** the bottom mould positioning assembly comprises:
a plurality of sliding blocks (42, 43) slidably disposed on the machine frame (31, 32, 33); multiple swing members (44, 45) swingably disposed on the machine frame (31, 32, 33) for driving the sliding of the plurality of sliding blocks (42, 43); and
a rotation member (41) rotatable relative to the machine frame for driving the swinging of the swing members (44, 45) relative to the machine frame during its' rotation,
the rotation member (41) being fixedly connected on the rotation shaft (21),
wherein when the mould opening and closing assembly is in the mould closing state, the plurality of sliding blocks (42, 43) are inserted between the bottom mould (1) and the machine frame (31, 32, 33) and contact against the bottom mould (1), when the mould opening and closing assembly is in the mould opening state, the plurality of sliding blocks (42, 43) are detached from the bottom mould (1).

2. The system as claimed in claim 1, wherein a through-hole is opened on each of the rotation member (41) and the moving mould plate (3), and the rotation shaft (21) sequentially extending through the rotation member (41) and the moving mould plate (3) from bottom to top and connecting with them.

3. The system as claimed in claim 1, wherein a swing arm (22) is connected on a lower end of the rotation shaft (21), and a power source driving the rotation of the rotation shaft (21) by the swing arm (22).

4. The system as claimed in claim 1, wherein the plurality of sliding blocks comprises a first sliding block (42) and a second sliding block (43) located at two opposite sides of the bottom mould (1), the bottom mould positioning assembly also comprising a first guide rail (46) and a second guide rail (47) fixedly disposed on the machine frame, the first sliding block (42) being slidably disposed on the first guide rail (46), and the second sliding block (43) being slidably disposed on the second guide rail (47).

5. The system as claimed in claim 4, wherein the multiple swing members comprises a first swing member (44) and a second swing member (45) which respectively are rotatably connected with the machine frame, and the first swing member (44) and the second swing member (45) respectively and correspondingly driving the sliding of the first sliding block (42) and the second sliding block (43).

6. The system as claimed in claim 5, wherein a first sliding groove (57) is opened on the first swing member (44) at a distance from the connecting position of the first swing member (44) with the machine frame, and a second sliding groove (58) is opened on the second swing member (45) at a distance from the connecting position of the second swing member (45) with the machine frame, a first projection (55) and a second projection (56) respectively being formed on an upper surface of the first sliding block (42) and the second sliding block (43), the first projection (55) being slidably inserted into the first sliding groove (57), and the second projection (56) being slidably inserted into the second sliding groove (58).

7. The system as claimed in claim 5, wherein the rotation member (41) has a first guiding surface (51) and a second guiding surface (52) on its' side surface, a first protrusion(53) protruding towards the rotation member (41) being formed on the first swing member (44), a second protrusion (54) protruding towards the rotation member (41) being formed on the second swing member (45), when the rotation member (41) rotates relative to the machine frame, the first guiding surface (51) slidably contacts with the first protrusion (53), the second guiding surface (52) slidably contacts with the second protrusion (54), and the distance between the contact position of the first guiding surface (51) with the first protrusion (53) and the axis of rotation and the distance between the contact position of the second guiding surface (52) with the second protrusion (54) and the axis of rotation respectively changing with the rotation of the rotation member (41).

8. The system as claimed in claim 1, wherein the mould opening and closing assembly also comprises a locking mechanism for locking the fixed mould plate (2) with the moving mould plate (3) in the mould closing state, the locking mechanism comprising:
at least one first connecting convex platform (4) formed on the moving mould plate (3), a pin hole (5) being opened on the first connecting convex platform (4);
a second connecting convex platform (6) formed on the fixed mould plate (2) for cooperating with the first connecting convex platform (4), a mounting hole being opened on the second connecting convex platform (6); and
a locking pin (8) movably or extendably inserted into the mounting hole of the second connecting convex platform (6), a connecting shaft extending through the fixed mould plate (2), and the the connecting shaft being connected with the locking pin (8) in a transmission way, when the mould opening and closing assembly is in the mould closing state, the locking pin(8) extending through the second connecting convex platform (6) and into the pin hole (5) to lock the moving mould plate (3) with the fixed mould plate (2), in such a way that the locking pin (8) is allowed to be detached from the pin hole (5) and enter into the mounting hole of the second connecting convex platform (6).

9. The system as claimed in any of claims 1-8, wherein the machine frame comprises a support frame (31), an upper frame (32) located above the support frame (31) and an upright frame (33) fixedly connected between the support frame (31) and the upper frame (32), both the mould opening and closing assembly and bottom mould positioning assembly being located above the support frame (31), a through-hole being opened on the support frame (31), the rotation shaft (21) rotatably extending through the through-hole such that a lower portion of the rotation shaft (21) extending below the support frame (31).

10. The system as claimed in claim 9, wherein the first swing member and the second swing member respectively are rotatably connected with the support frame (31).

11. The system as claimed in claim 9, wherein an upper end of the rotation shaft (21) is rotatably connected with the upper frame (32).

12. The system as claimed in any of claims 1-7, wherein an elastic member is arranged between each of the swing members and the machine frame.

## Patentansprüche

1. System, aufweisend
eine Flaschenblasformmaschine mit einem Maschinenrahmen (31, 32, 33),
eine Mechanik-Verbindung zum Form-Öffnen-und-Schließen und Bodenform(1)-Positionieren, die an der Flaschenblasmaschine montiert ist, wobei die Mechanik-Verbindung aufweist:
eine Form-Öffnen-und-Schließen-Einrichtung, die einen Form-Öffnen-Zustand und einen Form-Schließen-Zustand hat und die aufweist eine Bodenform (1), die relativ zu einem Maschinenrahmen der Flaschenblasmaschine in einer Aufwärts-Abwärts-Richtung bewegbar ist, eine feststehende Formplatte (2), die fest am Maschinenrahmen angeordnet ist, und eine Bewegungs-Formplatte (3), die relativ zu dem Maschinenrahmen drehbar ist,
wobei die Bewegungs-Formplatte (3) fest an einem Drehschaft (21) angebracht ist, welcher von einer Antriebsquelle angetrieben wird, um um eine Drehachse zu rotieren, und
eine Bodenform-Positioniereinrichtung zum Fixieren der Bodenform (1) an dem Maschinenrahmen der Flaschenblasmaschine, wobei, wenn die Form-Öffnen-und-Schließen-Einrichtung im Form-Schließen-Zustand ist, die Bewegungs-Formplatte (3) mit der feststehenden Formplatte (2) im Eingriff ist und die Bewegungs-Formplatte (3), die feststehende Formplatte (2) und die Bodenform (1) zusammen umschließen, um eine Kavität bereitzustellen,
**dadurch gekennzeichnet, dass** die Bodenform-Positioniereinrichtung aufweist:
eine Mehrzahl von Gleitblöcken (42, 43), die gleitverschiebbar am Maschinenrahmen (31, 32, 33) angeordnet sind,
mehrere Schwenkelemente (44, 45), die schwenkbar an dem Maschinenrahmen (31, 32, 33) angeordnet sind zum Antreiben der Gleitverschiebung der Mehrzahl von Gleitblöcken (42, 43), und ein Drehelement (41), das relativ zu dem Maschinenrahmen drehbar ist zum Antreiben der Schwenkbewegung der Schwenkelemente (44, 45) relativ zu dem Maschinenrahmen während seiner Drehung,
wobei das Drehelement (41) fest an dem Drehschaft (21) angebracht ist,
wobei, wenn die Form-Öffnen-und-Schließen-Einrichtung in dem Form-Schließen-Zustand ist, die Mehrzahl von Gleitblöcken (42, 43) zwischen die Bodenform (1) und den Maschinenrahmen (31, 32, 33) eingesetzt sind und im Berührungskontakt gegen die Bodenform (1) sind, und, wenn die Form-Öffnen-und-Schließen-Einrichtung im Form-Öffnen-Zustand ist, die Mehrzahl von Gleitblöcken (42, 43) von der Bodenform (1) abgelöst sind.

2. System gemäß Anspruch 1, wobei ein Durchgangsloch an jedem von dem Drehelement(41) und der Bewegungs-Formplatte (3) geöffnet ist, und wobei der Drehschaft (21) sich sequenziell durch das Drehelement (41) und die Bewegungs-Formplatte (3) hindurch erstreckt von der Unterseite aus zu der Oberseite hin und mit diesen verbunden ist.

3. System gemäß Anspruch 1, wobei ein Schwingarm (22) mit einem unteren Ende des Drehschafts (21) verbunden ist, und wobei eine Antriebsquelle die Drehung des Drehschafts (21) durch den Schwingarm (21) antreibt.

4. System gemäß Anspruch 1, wobei die Mehrzahl von Gleitblöcken einen ersten Gleitblock (42) und einen zweiten Gleitblock (43) aufweist, der an zwei gegenüberliegenden Seiten der Bodenform (1) angeordnet ist, wobei die Bodenform-Positioniereinrichtung ferner eine erste Führungsschiene (46) und eine zweite Führungsschiene (47) aufweist, die feststehend an dem Maschinenrahmen angeordnet sind, wobei der erste Gleitblock (42) gleitverschiebbar an der ersten Führungsschiene (46) angeordnet ist und der zweite Gleitblock (43) gleitverschiebbar an der zweiten Führungsschiene (47) angeordnet ist.

5. System gemäß Anspruch 4, wobei die mehreren Schwenkelemente aufweisen ein erstes Schwenkelement (44) und ein zweites Schwenkelement (45), die jeweils drehbar mit dem Maschinenrahmen verbunden sind, wobei das erste Schwenkelement (44) und das zweite Schwenkelement (45) jeweils zugeordnet die Gleitverschiebung des ersten Gleitblocks (42) und des zweiten Gleitblocks (43) antreiben.

6. System gemäß Anspruch 5, wobei eine erste Gleitnut (57) an dem ersten Schwenkelement (44) offen ist in einem Abstand von der Verbindungsposition des ersten Schwenkelements (44) mit dem Maschinenrahmen, und wobei die zweite Gleitnut (58) an dem zweiten Schwenkelement (45) offen ist in einem Abstand von der Verbindungsposition des zweiten Schwenkelements (45) mit dem Maschinenrahmen, wobei ein erster Vorsprung (55) und ein zweiter Vorsprung (56) jeweils zugeordnet an einer oberen Fläche des ersten Gleitblocks (42) und des zweiten Gleitblocks (43) ausgebildet sind, wobei der erste Vorsprung (55) gleitverschiebbar in die erste Gleitnut (57) eingesetzt ist und der zweite Vorsprung (56) gleitverschiebbar in die zweite Gleitnut (58) eingesetzt ist.

7. System gemäß Anspruch 5, wobei das Drehelement (41) eine erste Führungsfläche (51) und eine zweite Führungsfläche (52) an seiner Seitenfläche hat, wobei ein erster Vorsprung (53), der zu dem Drehelement (41) hin vorsteht, an dem ersten Schwenkelement (44) ausgebildet ist, ein zweiter Vorsprung (54), der zu dem Drehelement (41) hin vorsteht, an dem zweiten Schwenkelement (45) ausgebildet ist, wobei, wenn sich das Drehelement (41) relativ zu dem Maschinenrahmen dreht, die erste Führungsfläche (51) den ersten Vorsprung (53) gleitkontaktiert, die zweite Führungsfläche (52) den zweiten Vorsprung (54) gleitkontaktiert und der Abstand zwischen der Kontaktierungsposition der ersten Führungsfläche (51) mit dem ersten Vorsprung (53) und der Drehachse und der Abstand zwischen der Kontaktierungsposition der zweiten Führungsfläche (52) mit dem zweiten Vorsprung (54) und der Drehachse sich jeweils ändern mit der Drehung des Drehelements (41).

8. System gemäß Anspruch 1, wobei die Form-Öffnen-und-Schließen-Einrichtung ferner einen Verriegelungsmechanismus aufweist zum Verriegeln der feststehenden Formplatte (2) mit der Bewegungs-Formplatte (3) in dem Form-Schließen-Zustand, wobei der Verriegelungsmechanismus aufweist:
wenigstens eine erste konvexe Verbindungsplattform (4), die an der Bewegungs-Formplatte (3) ausgebildet ist, wobei ein Stiftloch (5) an der ersten konvexen Verbindungsplattform (4) offen ist,
eine zweite konvexe Verbindungsplattform (6), die an der feststehenden Formplatte (2) ausgebildet ist zum Zusammenwirken mit der ersten konvexen Verbindungsplattform (4), wobei ein Montageloch an der zweiten konvexen Verbindungsplattform (6) offen ist, und
einen Verriegelungsstift (8), der bewegbar oder ausdehnbar in das Montageloch der zweiten konvexen Verbindungsplattform (6) eingesetzt ist, wobei ein Verbindungsschaft sich durch die feststehende Formplatte (2) hindurcherstreckt, und wobei der Verbindungsschaft mit dem Verriegelungsstift (8) in einer Weiterleitweise verbunden ist, wobei, wenn die Form-Öffnen-und-Schließen-Einrichtung in dem Form-Schließen-Zustand ist, der Verriegelungsstift (8) sich durch die zweite konvexe Verbindungsplattform (6) hindurch und in das Stiftloch (5) hinein erstreckt, um die Bewegungs-Formplatte (3) mit der feststehenden Formplatte (2) verriegeln, sodass es dem Verriegelungsstift (8) ermöglicht ist, von dem Stiftloch (5) gelöst zu werden und in das Montageloch der zweiten konvexen Verbindungsplattform (6) einzutreten.

9. System gemäß irgendeinem der Ansprüche 1-8, wobei der Maschinenrahmen aufweist einen Stützrahmen (31), einen oberen Rahmen (32), der über dem Stützrahmen (31) angeordnet ist, und einen Aufrechtrahmen (33), der fest zwischen den Stützrahmen (31) und den oberen Rahmen (32) gekuppelt ist, wobei sowohl die Form-Öffnen-und-Schließen-Einrichtung als auch die Bodenform-Positioniereinrichtung über dem Stützrahmen (31) angeordnet sind, wobei ein Durchgangsloch an dem Stützrahmen (31) offen ist, wobei der Drehschaft (21) sich drehbar durch das Durchgangsloch erstreckt, sodass ein unterer Abschnitt des Drehschafts (21) sich unter dem Stützrahmen (31) erstreckt.

10. System gemäß Anspruch 9, wobei das erste Schwenkelement und das zweite Schwenkelement jeweils drehbar mit dem Stützrahmen verbunden sind.

11. System gemäß Anspruch 9, wobei ein oberes Ende des Drehschafts (21) drehbar mit dem oberen Rahmen (32) verbunden ist.

12. System gemäß irgendeinem der Ansprüche 1-7, wobei ein Elastikelement zwischen jedem der Schwenkelemente und dem Maschinenrahmen angeordnet ist.

## Revendications

1. Système comprenant :
une machine de moulage par soufflage de bouteille comportant un cadre de machine (31, 32, 33),
une liaison pour une ouverture et une fermeture de moule et un positionnement de moule de fond (1), monté sur la machine de soufflage de bouteille, la liaison comprenant :
un ensemble d'ouverture et de fermeture de moule ayant un état d'ouverture de moule et un état de fermeture de moule, qui comprend un moule de fond (1) mobile par rapport à un cadre de machine de la machine de soufflage de bouteille dans une direction de haut en bas, une plaque de moule fixe (2) disposée fixement sur le cadre de machine, et une plaque de moule mobile (3) rotative par rapport au cadre de machine,
dans lequel la plaque de moule mobile (3) est raccordée fixement sur un arbre de rotation (21) qui est entraîné par une source d'alimentation pour tourner autour d'un axe de rotation ; et
un ensemble de positionnement de moule de fond destiné à fixer le moule de fond (1) avec le cadre de machine et la machine de soufflage de bouteille ;
dans lequel, lorsque l'ensemble d'ouverture et de fermeture de moule est dans l'état de fermeture de moule, la plaque de moule mobile (3) est engagée avec la plaque de moule fixe (2), et la plaque de moule mobile (3), la plaque de moule fixe (2) et le moule de fond (1) se referment ensemble pour fournir une cavité ;
**caractérisé en ce que** l'ensemble de positionnement de moule de fond comprend :
une pluralité de blocs coulissants (42, 43) disposés avec faculté de coulissement sur le cadre de machine (31, 32, 33) ;
de multiples organes de basculement (44, 45) disposés avec faculté de basculement sur le cadre de machine (31, 32, 33) en vue d'entraîner le coulissement de la pluralité de blocs coulissants (42, 43) ; et
un organe de rotation (41) rotatif par rapport au cadre de machine en vue d'entraîner le basculement des organes de basculement (44, 45) par rapport au cadre de machine pendant sa rotation, l'organe de rotation (41) étant raccordé fixement sur l'arbre de rotation (21),
dans lequel lorsque l'ensemble d'ouverture et de fermeture de moule est dans l'état de fermeture de moule,
la pluralité de blocs coulissants (42, 43) est insérée entre le moule de fond (1) et le cadre de machine (31, 32, 33) et vient en contact contre le moule de fond (1), lorsque l'ensemble d'ouverture et de fermeture de moule est dans l'état d'ouverture de moule, la pluralité de blocs coulissants (42, 43) est détachée du moule de fond (1).

2. Système selon la revendication 1, dans lequel un trou traversant débouche sur chacun de l'organe de rotation (41) et de la plaque de moule mobile (3), et l'arbre de rotation (21) s'étendant séquentiellement à travers l'organe de rotation (41) et la plaque de moule mobile (3) de bas en haut et s'y raccordant.

3. Système selon la revendication 1, dans lequel un bras de basculement (22) est raccordé sur une extrémité inférieure de l'arbre de rotation (21), et une source d'alimentation entraînant la rotation de l'arbre de rotation (21) par le bras de basculement (22).

4. Système selon la revendication 1, dans lequel la pluralité de blocs coulissants comprend un premier bloc coulissant (42) et un second bloc coulissant (43) situés à des côtés opposés du moule de fond (1), l'ensemble de positionnement de moule de fond comprenant également un premier rail-guide (46) et un second rail-guide (47) disposés fixement sur le cadre de machine, le premier bloc coulissant (42) étant disposé avec faculté de coulissement sur le premier rail-guide (46), et le second bloc coulissant (43) étant disposé avec faculté de coulissement sur le second rail-guide (47).

5. Système selon la revendication 4, dans lequel les multiples organes de basculement comprennent un premier organe de basculement (44) et un second organe de basculement (45) qui sont respectivement raccordés avec faculté de rotation au cadre de machine, et le premier organe de basculement (44) et le second organe de basculement (45) entraînant respectivement et en correspondance le coulissement du premier bloc coulissant (42) et du second bloc coulissant (43).

6. Système selon la revendication 5, dans lequel une première rainure coulissante (57) débouche sur le premier organe de basculement (44) à une distance de la position de raccordement du premier organe de basculement (44) avec le cadre de machine, et une seconde rainure coulissante (58) débouche sur le second organe de basculement (45) à une distance de la position de raccordement du second organe de basculement (45) avec le cadre de machine, une première saillie (55) et une seconde saillie (56) étant respectivement formées sur une surface supérieure du premier bloc coulissant (42) et du second bloc coulissant (43), la première saillie (55) étant insérée avec faculté de coulissement dans la première rainure coulissante (57), et la seconde saillie (56) étant insérée avec faculté de coulissement dans la seconde rainure coulissante (58).

7. Système selon la revendication 5, dans lequel l'organe de rotation (41) a une première surface de guidage (51) et une seconde surface de guidage (52) sur sa surface de côté, une première protubérance (53) protubérante vers l'organe de rotation (41) étant formée sur le premier organe de basculement (44), une seconde protubérance (54) protubérante vers l'organe de rotation (41) étant formée sur le second organe de basculement (45), lorsque l'organe de rotation (41) tourne par rapport au cadre de machine, la première surface de guidage (51) vient en contact avec faculté de coulissement avec la première protubérance (53), la seconde surface de guidage (52) vient en contact avec faculté de coulissement avec la seconde protubérance (54), et la distance entre la position de contact de la première surface de guidage (51) avec la première protubérance (53) et l'axe de rotation et la distance entre la position de contact de la seconde surface de guidage (52) avec la seconde protubérance (54) et l'axe de rotation changeant respectivement avec la rotation de l'organe de rotation (41).

8. Système selon la revendication 1, dans lequel l'ensemble d'ouverture et de fermeture de moule comprend également un mécanisme de verrouillage pour verrouiller la plaque de moule fixe (2) avec la plaque de moule mobile (3) dans l'état de fermeture de moule, le mécanisme de verrouillage comprenant :
au moins une première plateforme convexe de raccordement (4) formée sur la plaque de moule mobile (3), un trou de cheville (5) débouchant sur la première plateforme convexe de raccordement (4) ;
une seconde plateforme convexe de raccordement (6) formée sur la plaque de moule fixe (2) pour coopérer avec la première plateforme convexe de raccordement (4), un trou de montage étant débouchant sur la seconde plateforme convexe de raccordement (6) ; et
une cheville de verrouillage (8) insérée avec faculté de mouvement ou d'extension dans le trou de montage de la seconde plateforme convexe de raccordement (6), un arbre de raccordement s'étendant à travers la plaque de moule fixe (2), et l'arbre de raccordement étant raccordé à la cheville de verrouillage (8) à la manière d'une transmission, lorsque l'ensemble d'ouverture et de fermeture de moule est dans l'état de fermeture de moule, la cheville de verrouillage (8) s'étendant à travers la seconde plateforme convexe de raccordement (6) et dans le trou de cheville (5) pour verrouiller la plaque de moule mobile (3) avec la plaque de moule fixe (2), de telle manière que la cheville de verrouillage (8) puisse être détachée du trou de cheville (5) et entrer dans le trou de montage de la seconde plateforme convexe de raccordement (6).

9. Système selon l'une quelconque des revendications 1 à 8, dans lequel le cadre de machine comprend un cadre de support (31), un cadre supérieur (32) situé au-dessus du cadre de support (31) et un cadre érigé (33) raccordé fixement entre le cadre de support (31) et le cadre supérieur (32), l'ensemble d'ouverture et de fermeture de moule et l'ensemble de positionnement de moule de fond étant tous deux situés au-dessus du cadre de support (31), un trou traversant débouchant sur le cadre de support (31), l'arbre de rotation (21) s'étendant avec faculté de rotation à travers le trou traversant de telle sorte qu'une portion inférieure de l'arbre de rotation (21) s'étende en dessous du cadre de support (31).

10. Système selon la revendication 9, dans lequel le premier organe de basculement et le second organe de basculement sont respectivement raccordés avec faculté de rotation au cadre de support (31).

11. Système selon la revendication 9, dans lequel une extrémité supérieure de l'arbre de rotation (21) est raccordée avec faculté de rotation au cadre supérieur (32).

12. Système selon l'une quelconque des revendications 1 à 7, dans lequel un organe élastique est agencé entre chacun des organes de basculement et le cadre de machine.
